# EUROPÄISCHE PATENTSCHRIFT

(11) **EP 1 120 585 B1**
(45) Veröffentlichungstag und Bekanntmachung des Hinweises auf die Patenterteilung: **12.03.2008**
(21) Anmeldenummer: 01101471.9
(22) Anmeldetag: 23.01.2001
(51) Int. Cl.: F16H 25/18

(54) **Lineareinheit**
Linear actuator
Actionneur linéaire

(30) Priorität: 24.01.2000 DE 10002849
(43) Veröffentlichungstag der Anmeldung: 01.08.2001
(73) Patentinhaber: Bosch Rexroth Mechatronics GmbH, 97424 Schweinfurt (DE)
(72) Erfinder: Keller, Bernhard, 97535 Wasserlosen (DE)
(74) Vertreter: Herzog, Markus

(56) Entgegenhaltungen:
- EP-A- 0 327 705
- EP-A- 0 784 167
- US-A- 3 109 335
- US-A- 4 744 287
- US-A- 5 974 904

## Beschreibung

Die Erfindung betrifft eine Lineareinheit mit einem Läufer, der längs einer Stange hin- und herbewegbar angeordnet ist, wobei in Laufrichtung des Läufers vor oder/und hinter diesem wenigstens eine Stützeinheit vorgesehen ist, welche die Stange relativ zu einem im Wesentlichen starren Gegenelement abstützt, wobei an dem Läufer oder einer mit diesem verbundenen Einheit ein Mitnehmer vorgesehen ist, der mit der Stützeinheit in Mitnahmeeingriff bringbar ist, wobei die Stützeinheit einen zum einen an der Stange und zum anderen an dem Gegenelement in Laufrichtung längsverschiebbar, jedoch bezüglich der Laufrichtung drehfest geführten Grundkörper umfasst, an welchem ein Steuerelement bewegbar gelagert ist, das mittels einer am Gegenelement vorgesehenen Steuerbahn zwischen wenigstens einer Mitnahmestellung und wenigstens einer Freigabestellung verstellbar ist.

Die vorstehend angesprochenen Stützeinheiten werden bei derartigen Lineareinheiten üblicherweise dann eingesetzt, wenn die Länge der Stange ein unter anderem von ihrem Durchmesser, ihrem Aufbau und den ihr auferlegten Betriebsbedingungen abhängiges Höchstmaß überschreitet, um ein Durchhängen bzw. Ausknicken der Stange zu verhindern. Unabhängig von der genauen Ausgestaltung der Lineareinheit unterliegt die Stange selbstverständlich der Schwerkraft. Bei Linearantrieben, bei denen die Drehung einer als Gewindespindel ausgebildeten Stange in eine Linearbewegung eines eine Gewindemutter umfassenden Läufers umgewandelt wird, kommen überdies von der Drehung der Gewindespindel herrührende, auf diese einwirkende Zentrifugalkräfte hinzu. Durch Einsatz der genannten Stützeinheiten gelingt es, die nicht unterstützten Weglängen der Stange so klein zu halten, dass das Durchhängen bzw. Ausknicken der Stange zwischen zwei aufeinander folgenden Stützstellen ein tolerierbares Maß nicht überschreitet.

Selbstverständlich dürfen die Stützeinheiten die Bewegung des Läufers nicht behindern. Es muss daher möglich sein, dass der Läufer bei Bewegung in einer bestimmten Richtung die in Laufrichtung vor ihm angeordneten Stützeinheiten nach und nach "aufsammelt". Darüber hinaus muss es aber auch möglich sein, dass der Läufer nach Umkehr seiner Bewegungsrichtung die zuvor aufgesammelten Stützeinheiten wieder an den für sie vorgesehenen Stützpositionen "absetzt".

Hierzu wurde in der gattungsbildenden EP 0 327 705 B1 ein Linearantrieb vorgeschlagen, bei welchem die Stützeinheiten an den für sie jeweils vorgesehenen Stützpositionen mit dem Gegenelement verrastet werden. Die Stützeinheiten umfassen hierzu einen Grundkörper, der sich sowohl mit der als Gewindespindel ausgebildeten Stange als auch mit dem als Führungsschiene ausgebildeten Gegenelement in Stützeingriff befindet, sowie einen Steuerschieber, der in dem Grundkörper orthogonal zur Längsrichtung der Gewindespindel verlagerbar aufgenommen ist. Der Steuerschieber ist dabei gegenüber dem Grundkörper derart federvorgespannt, dass eine an ihm vorgesehene Rastnase gegen eine Gleitbahn angedrückt wird, in der an den vorbestimmten Stützpositionen entsprechende Rastausnehmungen vorgesehen sind. Ferner ist an dem Steuerschieber ein Mitnehmerzapfen angeordnet. Befindet sich die Stützeinheit im Bereich einer Gleitstrecke der Gleitbahn, so ragt der Mitnehmerzapfen nach oben aus der Stützeinheit heraus und greift in eine am Läufer angebrachte Mitnehmerschiene ein, welche die Stützeinheit bei einer Bewegung des Läufers mitnimmt. Gelangt die Stützeinheit hingegen in den Bereich einer Rastausnehmung der Gleitbahn, so fällt die Rastnase infolge der Federvorspannung des Steuerschiebers in die Rastausnehmung ein, und infolgedessen wird der Mitnehmerzapfen aus der Mitnehmerschiene des Läufers zurückgezogen, so dass der Mitnahmeeingriff zwischen Stützeinheit und Mitnehmerschiene aufgehoben wird.

Nachteilig ist an dieser Lösung, dass bei Einsatz einer Mehrzahl von Stützeinheiten nicht nur die Rastnase der in Laufrichtung jeweils letzten Stützeinheit in die für diese Stützeinheit vorgesehene Rastausnehmung der Gleitbahn einfällt, sondern im Zuge ihrer Vorüberbewegung auch die Rastnasen der vor ihr angeordneten Stützeinheiten. Allerdings wird die Verrastung derjenigen Stützeinheiten, die ihre vorbestimmte Stützposition noch nicht erreicht haben, durch die nachfolgenden Stützeinheiten, die sich noch in Mitnahmeeingriff mit der Mitnehmerschiene befinden, wieder aufgehoben. Dieses fortwährende Ein- und Ausrasten hat nicht nur einen erhöhten Verschleiß an den Rastnasen und Rastausnehmungen zur Folge, sondern führt überdies auch zu einer erhöhten Geräuschentwicklung der Lineareinheit.

Demgegenüber ist es Aufgabe der vorliegenden Erfindung, eine gattungsgemäße Lineareinheit anzugeben, welche sich durch geringeren Verschleiß und geringere Geräuschentwicklung auszeichnet.

Diese Aufgabe wird erfindungsgemäß durch die Merkmale in Anspruch 1 gelöst. In der Lineareinheit weist das Steuerelement wenigstens eine Steuervertiefung mit einer zur Laufrichtung im Wesentlichen orthogonal verlaufenden Vertiefungsrichtung auf und die Steuerbahn an wenigstens einer vorbestimmten Position einen Steueransatz umfasst, der mit der Steuervertiefung in Eingriff bringbar und bezüglich der Laufrichtung derart schräg angeordnet ist, dass er das Steuerelement bei Bewegung der Stützeinheit in Laufrichtung im Wesentlichen quer sowohl zur Laufrichtung als auch zur Vertiefungsrichtung verstellt. Der Hauptunterschied zu der vorstehend erläuterten Lösung gemäß der EP 0 327 705 B1 besteht darin, dass die Bewegungsrichtung des Steuerelements und die Vertiefungsrichtung der Steuervertiefung, d.h. im Falle der EP 0 327 705 B1 der Rastvertiefung, nicht im Wesentlichen parallel zueinander verlaufen, sondern dass die Bewegung des Steuerelements infolge des Eingriffs mit dem Steueransatz quer zur Vertiefungsrichtung der Steuervertiefung des Steuerelements verläuft. Der Steueransatz schiebt das Steuerelement also zur Seite, wozu lediglich ein verschleiß- und geräuscharmer Gleiteingriff zwischen dem Steueransatz und den die Steuervertiefung umgrenzenden Teilen des Steuerelements erforderlich ist.

Es sei bereits an dieser Stelle darauf hingewiesen, dass unter einer "quer zur Vertiefungsrichtung verlaufenden Bewegung des Steuerelements" sowohl eine zu dieser Vertiefungsrichtung und zur Laufrichtung im Wesentlichen orthogonale Bewegung des Steuerelements verstanden wird als auch eine Bewegung in Umfangsrichtung um eine zur Laufrichtung des Läufers bzw. Längsachse der Stange im Wesentlichen parallel verlaufende Achse.

Demgemäß kann das Steuerelement eine Steuerscheibe sein, die an dem Grundkörper um eine zur Längsachse der Stange im Wesentlichen parallel verlaufende Achse drehbar angeordnet ist. Es ist jedoch auch möglich, dass das Steuerelement ein Steuerschieber ist, der an dem Grundkörper in einer zur Längsachse der Stange im Wesentlichen orthogonal verlaufenden Richtung verlagerbar angeordnet ist. In beiden Ausführungsalternativen kann dabei das Steuerelement mittels eines Abdeckelements in einer zwischen dem Abdeckelement und einer Schulter des Grundkörpers ausgebildeten Vertiefung gehalten sein, was eine konstruktiv einfache Möglichkeit der Anordnung des Steuerelements am Grundkörper ermöglicht.

Der Mitnahmeeingriff zwischen der Stützeinheit und dem Läufer bzw. der mit diesem verbundenen Einheit kann in einfacher Weise realisiert werden, wenn der Mitnehmer ein Hakenelement umfasst. Ferner kann an dem Grundkörper zur Mitnahme einer benachbarten Stützeinheit ein weiterer Mitnehmer angeordnet sein. Auch dies vereinfacht den konstruktiven Aufbau der Lineareinheit, da bei Einsatz einer Mehrzahl von Stützeinheiten nicht alle Mitnehmer für diese Stützeinheiten an dem Läufer angeordnet zu sein brauchen, sondern jede der Stützeinheiten mit den ihr benachbarten Stützeinheiten in Mitnahmeeingriff bringbar ist. Die vorstehend im Zusammenhang mit dem Mitnahmeeingriff angesprochene, mit dem Läufer verbundene Einheit kann also eine mit dem Läufer in Mitnahmeeingriff stehende Stützeinheit bzw. eine Mehrzahl von miteinander und mit dem Läufer in Mitnahmeeingriff stehende Mehrzahl von Stützeinheiten sein.

Zum Herstellen und Lösen des Mitnahmeeingriffs kann das Hakenelement eine Mitnahmefläche des Steuerelements hintergreifen und kann in der Mitnahmefläche wenigstens eine Freigabeausnehmung vorgesehen sein, welche in der korrespondierenden Freigabestellung mit dem Hakenelement fluchtet. Alternativ ist es jedoch auch möglich, dass das Hakenelement eine Mitnahmefläche des Grundkörpers hintergreift und dass das Steuerelement wenigstens einen Nocken umfasst, welcher in der korrespondierenden Freigabestellung die Verhakung von Hakenelement und Grundkörper löst.

Um die Herstellung des Mitnahmeeingriffs erleichtern bzw. auch bei nicht präzise eingestelltem Steuerelement gewährleisten zu können, wird in Weiterbildung der Erfindung vorgeschlagen, dass das Hakenelement mit dem Läufer oder der mit diesem verbundenen Einheit über einen, vorzugsweise elastischen, Arm verbunden ist. Die Herstellung des Mitnahmeeingriffs kann also notfalls auch durch Verrastung des Hakenelements mit der Mitnahmefläche erfolgen. Zur Erleichterung dieser Verrastung kann ferner vorgesehen sein, dass an wenigstens einem der Teile, Hakenelement und Steuerelement oder Hakenelement und Grundkörper, eine Einweisungsschräge ausgebildet ist, welche die Herstellung des Mitnahmeeingriffs erleichtert.

Um das Steuerelement zuverlässig in der Freigabestellung halten zu können, die zumindest bei einigen der vorstehend beschriebenen Ausführungsvarianten für die Wiederherstellung des Mitnahmeeingriffs erforderlich ist, kann eine Verstellsicherung vorgesehen sein mit einem, vorzugsweise federvorgespannten, Rastelement, das an einem der Teile, Grundkörper oder Steuerelement, angeordnet ist und in der Freigabestellung in eine Rastausnehmung eingreift, die am jeweils anderen Teil, Steuerelement oder Grundkörper, vorgesehen ist. Alternativ kann auch eine reibschlüssig arbeitende Verstellsicherung vorgesehen sein, beispielsweise in Form einer dem Steueransatz benachbarten Bremsvorrichtung, welche mit der Stützeinheit, vorzugsweise deren Steuerelement, in Bremseingriff steht. Die Bremsvorrichtung kann dabei an einem Schrägabschnitt der Steuerschiene einstückig angeformt sein. Reichen die ohnehin vorhandenen Reibungskräfte zwischen dem Steuerelement und dem Grundkörper der Stützeinheit aus, um einer unbeabsichtigen Verstellung des Steuerelements vorbeugen zu können, so kann auf eine gesonderte Verstellsicherung bzw. Bremsvorrichtung insgesamt verzichtet werden.

Grundsätzlich ist es zwar möglich, dass die am Gegenelement vorgesehene Steuerbahn lediglich die zum Verstellen des Steuerelements der wenigstens einen Stützeinheit erforderliche Anzahl von Steueransätzen umfasst. Um stets eine eindeutige Positionierung des Steuerelements sicherstellen zu können, ist es jedoch vorteilhaft, wenn der wenigstens eine Steueransatz Teil einer am Gegenelement angeordneten Steuerschiene ist, die ständig mit wenigstens einer Steuervertiefung des Steuerelements in Eingriff ist und sich vorzugsweise über die gesamte Länge der Stange erstreckt. Die Steuerschiene kann dabei wenigstens einen länglichen Geradabschnitt und wenigstens einen länglichen Schrägabschnitt umfassen und ist vorzugsweise aus wenigstens einem länglichen Geradteil und wenigstens einem länglichen Schrägteil zusammengesetzt. Dabei kann der Geradabschnitt wenigstens einen Führungsansatz aufweisen, der über die gesamte Länge des Geradabschnitts an im Wesentlichen der gleichen Querposition angeordnet ist, und zum Eingriff in eine zugeordnete Steuervertiefung bestimmt ist, während der Steueransatz des Schrägabschnitts längs dessen Länge seine Querposition ändert. Da das Steuerelement somit erfindungsgemäß jeweils in den Schrägabschnitten weitergeschaltet wird, gelangt auch die Freigabeausnehmung bzw. der Freigabenocken im Bereich eines Schrägabschnitts in Flucht zu dem Mitnehmerhaken und löst dessen Mitnahmeeingriff mit der Mitnahmefläche. Daher definieren die Schrägabschnitte die Positionen, an denen die infolge des Mitnahmeeingriffs hinter dem Läufer hergezogenen Stützeinheiten abgesetzt werden, d.h. die Stützpositionen.

Nachzutragen ist noch, dass an wenigstens einer Stirnseite des Grundkörpers eine Dämpfungsvorrichtung vorgesehen sein kann. Diese kann beispielsweise von einer Mehrzahl von Dämpfungselementen gebildet sein, welche vorzugsweise aus Gummi oder einem gummiartigen Material gefertigt sind. Diese Dämpfungsvorrichtung dient dazu, beim "Aufsammeln" der Stützeinheiten durch den Läufer deren Aufprall und insbesondere die damit verbundene Geräuschentwicklung zu dämpfen.

Der Grundkörper oder/und das Steuerelement oder/und das Abdeckelement oder/und die Elemente der Steuerbahn können aus Kunststoff gefertigt sein, was sich auf die Herstellungskosten der erfindungsgemäßen Lineareinheit vorteilhaft auswirkt.

Das Gegenelement kann von einer Schiene, beispielsweise einer Führungsschiene für den Läufer, mit einem an wenigstens einer Seite offenen Hohlprofil gebildet sein, in deren Innenraum zumindest die Stange und die wenigstens eine Stützeinheit aufgenommen ist. Diese Schiene kann beispielsweise als Aluminium-Strangpressprofil gefertigt sein.

Neben der vorstehend bereits angesprochenen Möglichkeit, die Lineareinheit als Wälzkörpergewindetrieb auszubilden, sei noch darauf hingewiesen, dass die erfindungsgemäße Lineareinheit auch bei anderen Arten von Lineareinheiten mit Vorteil eingesetzt werden kann. An dieser Stelle seien lediglich Kugelbüchsenführungen, Magnetkolbeneinheiten und Linearmotormodule genannt. Bei Magnetkolbeneinheiten, die nicht Teil der vorliegenden Erfindung sind, ist die Stange als Hohlrohr ausgebildet, in welchem ein magnetischer Kolben durch Druckfluidbeaufschlagung verschiebbar ist, und ist der Läufer mit dem Kolben über Magnetkräfte gekoppelt. Bei Linearmotormodulen, die nicht Teil der vorliegenden Erfindung sind, ist die Stange als Vorschubstange eines den Läufer antreibenden Linearmotors ausgebildet. Die Abstützung ist in diesem Fall besonders vorteilhaft, da neben der Schwerkraft auch magnetische Anziehungskräfte zwischen Stange und Gegenelement auf die Stange einwirken.

Die Erfindung wird im Folgenden an Ausführungsbeispielen anhand der beigefügten Zeichnungen näher erläutert werden. Es stellt dar:
- Fig. 1: eine perspektivische Ansicht einer als Wälzkörpergewindetrieb ausgebildeten erfindungsgemäßen Lineareinheit;
- Fig. 2: eine teilweise geschnittene Stirnansicht des Wälzkörpergewindetriebs aus Fig. 1;
- Fig. 3: eine im Bereich einer Stützeinheit genommene Seitenschnittansicht des Wälzkörpergewindetriebs aus Figuren 1 und 2;
- Fig. 4: die Steuerscheibe der in Fig. 3 dargestellten Stützeinheit in Stirnansicht längs des Pfeils IV in Fig. 3;
- Fig. 5 und 6: perspektivische Ansichten eines Geradabschnitts (Fig. 5) bzw. eines Schrägabschnitts (Fig. 6) der Steuerschiene des Wälzkörpergewindetriebs gemäß Figuren 1 und 2;
- Fig. 7 bis 9: Darstellungen zur Erläuterung des Zusammenwirkens der Steuerschiene, insbesondere der Schrägabschnitte der Steuerschiene, mit der Steuerscheibe gemäß Fig. 4;
- Fig. 10: eine Darstellung ähnlich Fig. 4 eines als Steuerschieber ausgebildeten Steuerelements, das in einer Stützeinheit ähnlich Fig. 3 zum Einsatz kommen kann;

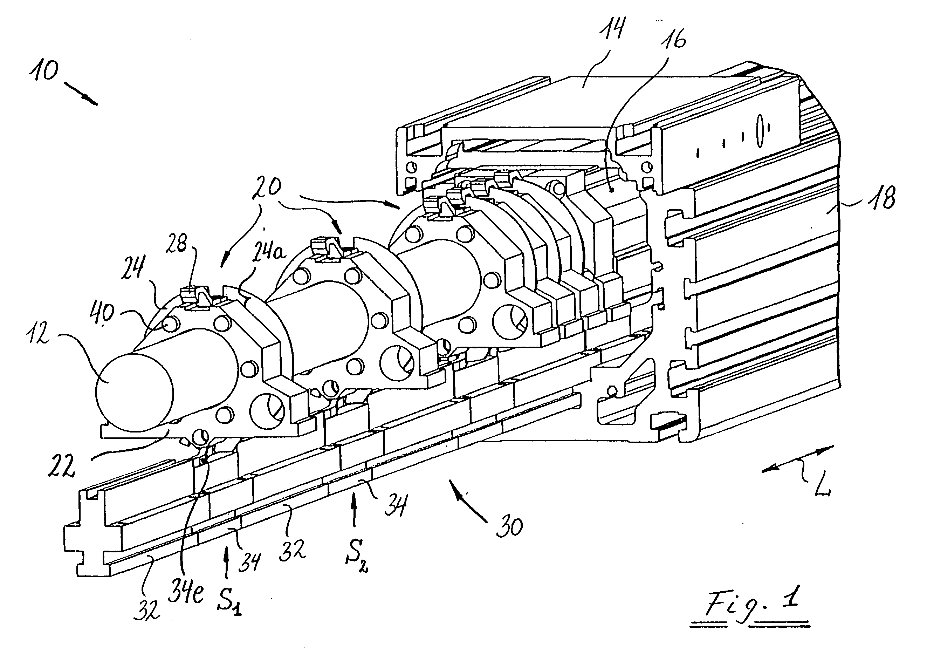

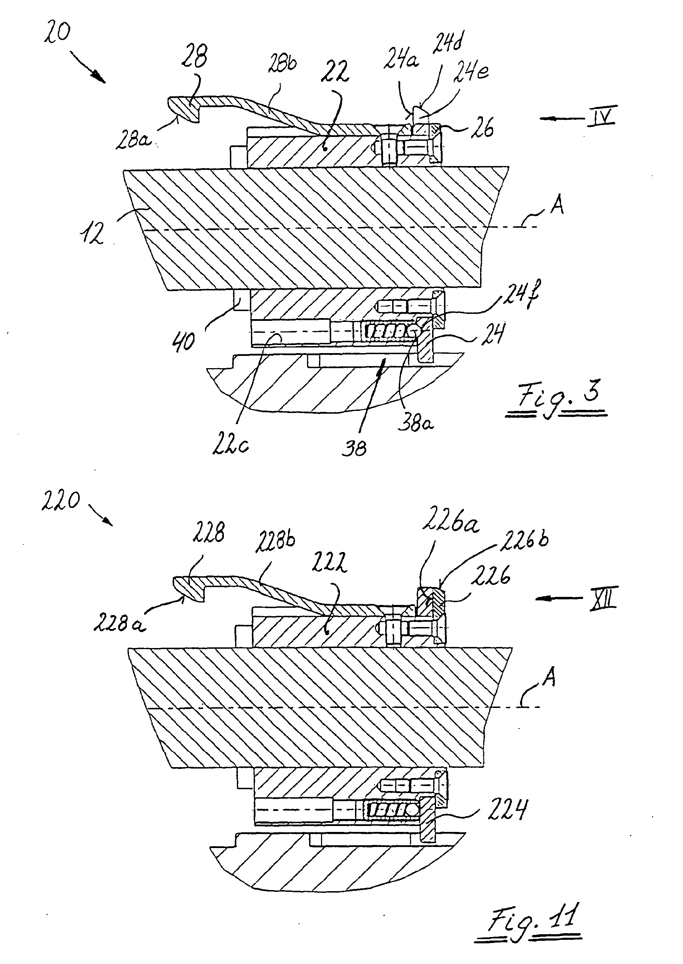

- Fig. 1: eine Ansicht ähnlich Fig. 3 einer weiteren Ausführungsform einer Stützeinheit;

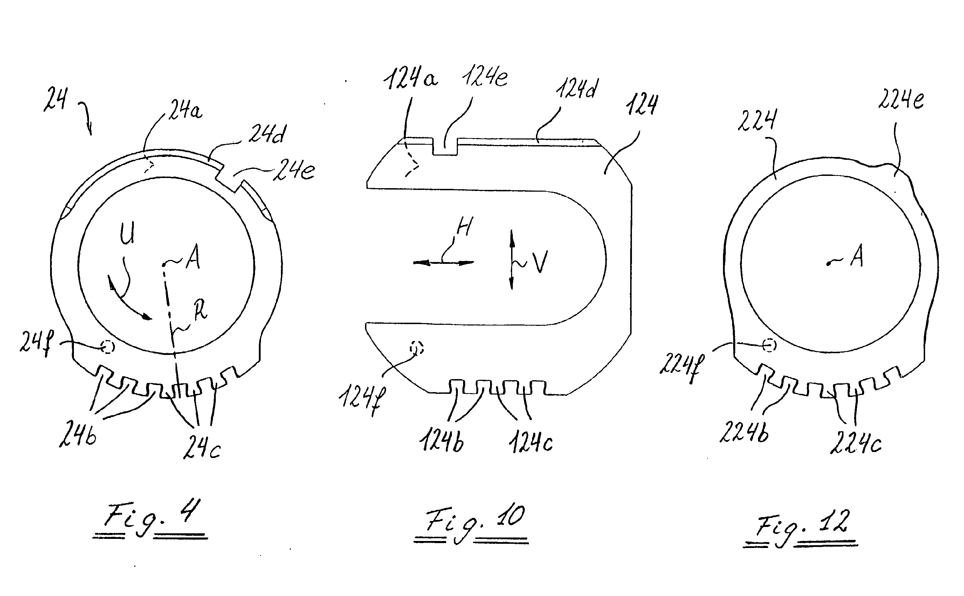

- Fig. 12: eine Ansicht ähnlich Fig. 4 der Steuerscheibe der Stützeinheit aus Fig. 11 in Stirnansicht gemäß dem Pfeil XII in Fig. 11;

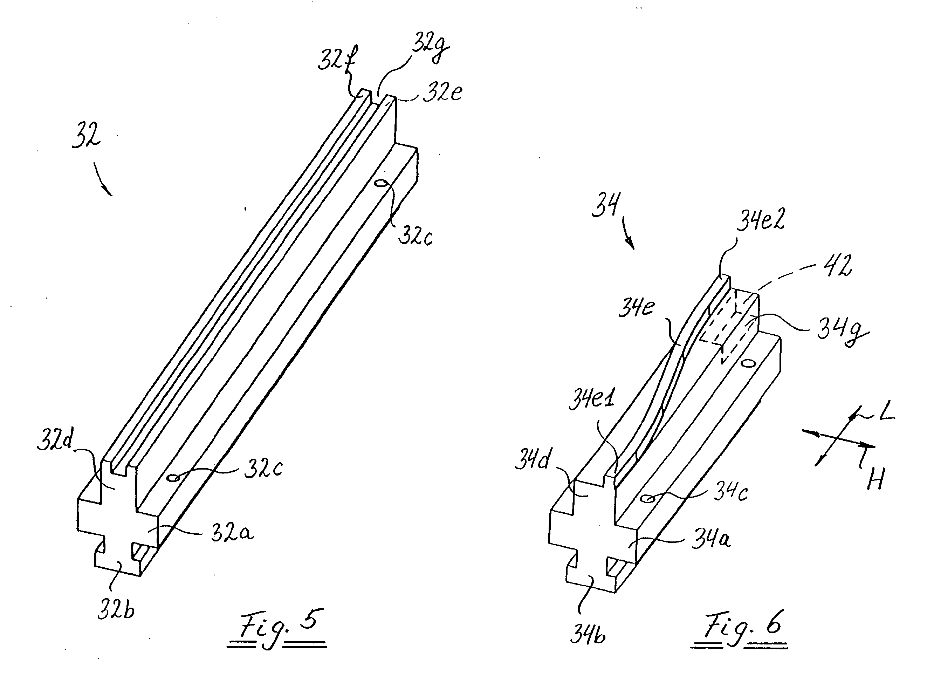

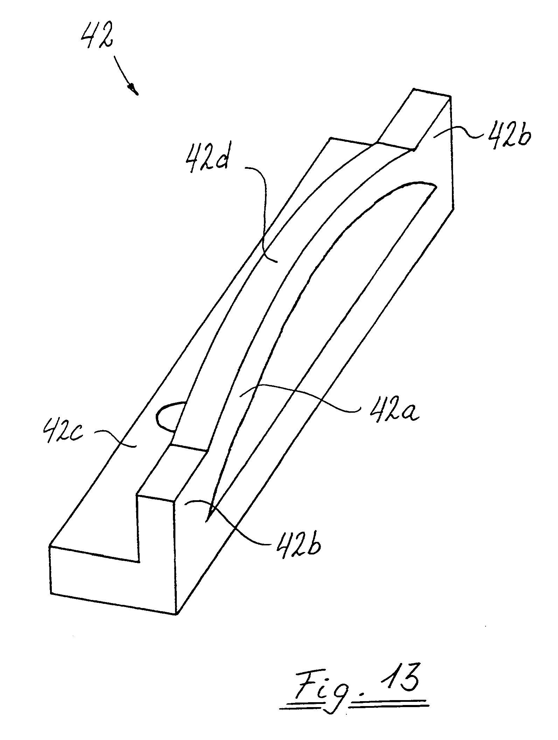

- Fig. 13: eine Ansicht ähnlich Figuren 5 und 6 eines Brems- und Halteelements für eine Stützeinheit gemäß Figuren 3 und 11;

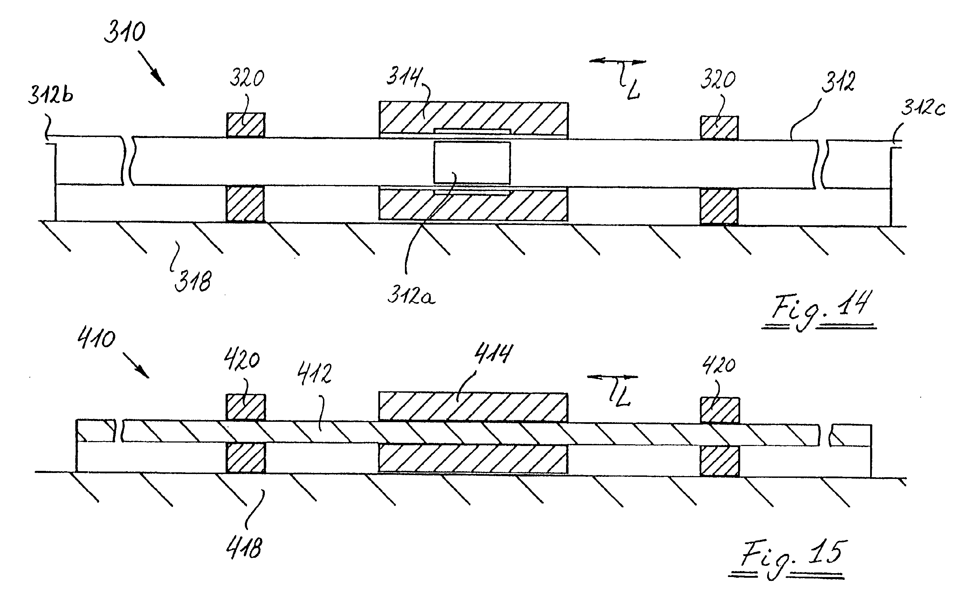

- Fig. 14 und 15: grobschematische Seitenansichten von als Magnetkolbeneinheit (Fig. 14) bzw. als Linearmotormodul (Fig. 15) ausgebildeten Lineareinheiten, die jedoch nicht Teil der vorliegenden Erfindung sind,

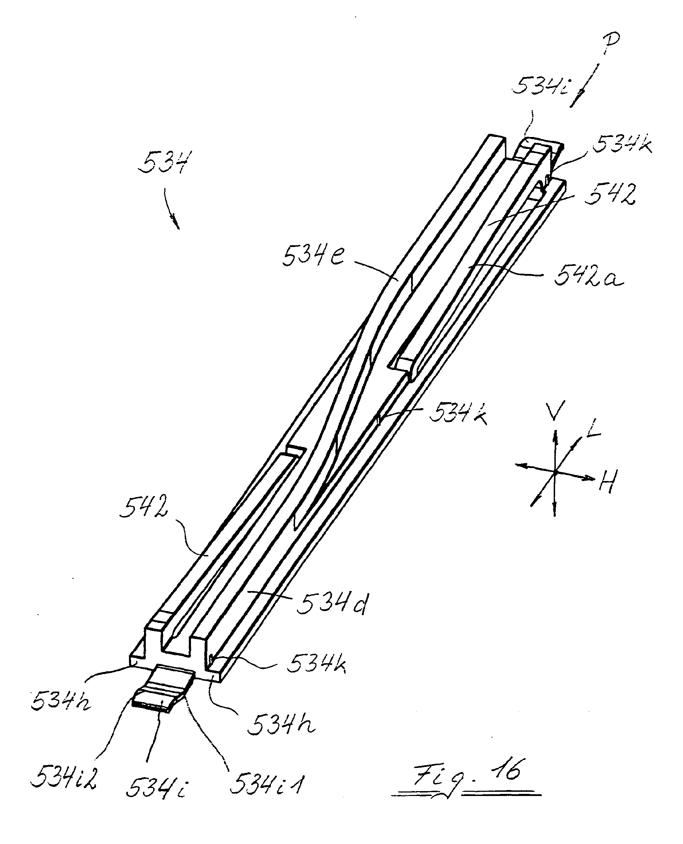

- Fig. 16: eine Ansicht ähnlich Fig. 6 einer weiteren Ausführungsform eines Schrägabschnitts einer Steuerschiene eines erfindungsgemäßen Wälzkörpergewindetriebs; und

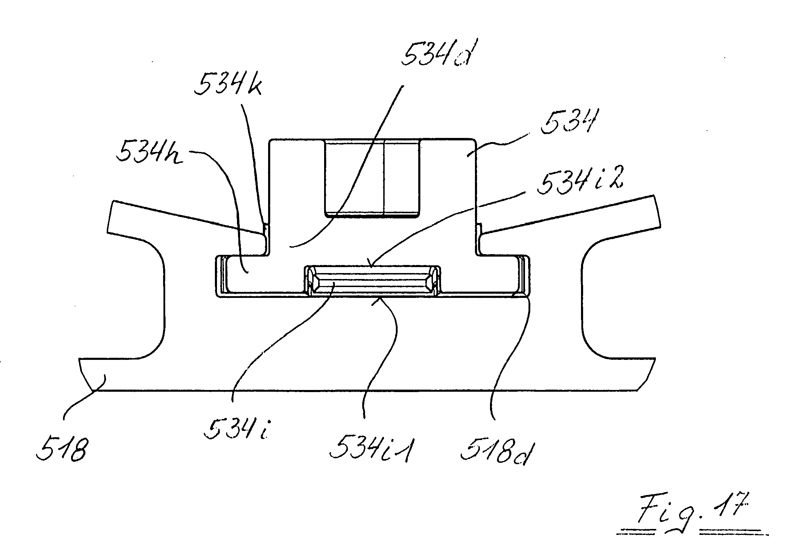

- Fig. 17: eine Stirnansicht in Richtung des Pfeils P des Schrägabschnitts gemäß Fig. 16 in einem in die Führungsschiene des Wälzkörpergewindetriebs eingebauten Zustand.

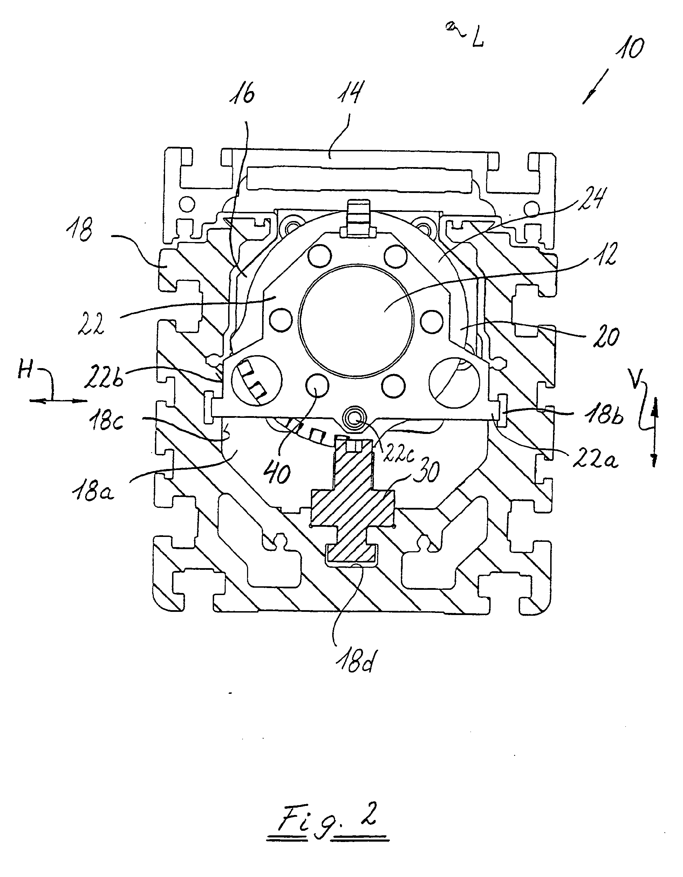

In Fig. 1 ist eine als Wälzkörpergewindetrieb ausgebildete Lineareinheit allgemein mit 10 bezeichnet. Sie umfasst eine Gewindespindel 12 und einen Läufer 14, der mit der Gewindespindel über eine Gewindemutter 16 verbunden ist. Die Gewindespindel 12 bildet bei der vorliegenden Ausführungsform die Stange im Sinne des Ansprüche. Der Läufer 14 ist über nicht näher dargestellte Mittel auf einer Führungsschiene 18 in Richtung des Doppelpfeils L verschiebbar geführt, die im Querschnitt ein im Wesentlichen U-förmiges Profil aufweist. Die Gewindespindel 12 ist im Innenraum 18a der Führungsschiene 18 aufgenommen und mit ihren in den Fig. 1 und 2 nicht dargestellten Längsenden an der Führungsschiene 18 bzw. mit dieser verbundenen Teilen drehbar gelagert. Die Art und Weise, in der bei einem derartigen Wälzkörpergewindetrieb eine Drehung der Gewindespindel 12 in eine Linearbewegung des Läufers 14 umgewandelt wird, ist allgemein bekannt und soll daher hier nicht näher erläutert werden.

In Fig. 1 erkennt man ferner eine Mehrzahl von Stützeinheiten 20, von denen die beiden linkesten an den ihnen zugeordneten Stützstellen S₁ und S₂ angeordnet sind, während sich die weiteren Stützeinheiten 20 über Haken 28 in Mitnahmeeingriff mit dem Läufer 14 befinden. Die Stützeinheiten 20 dienen zur Abstützung der Gewindespindel 12 an der Führungsschiene 18, um deren statisches Durchhängen bzw. dynamisches Ausknicken (beispielsweise infolge zu schneller Drehung) zu verhindern. Eine Stützeinheit 20 umfasst hierzu einen Grundkörper 22, der mit Ansätzen 22a in Längsnuten 18b der Führungsschiene 18 gleitverschieblich aufgenommen und in Vertikalrichtung V sowohl nach oben als auch nach unten abgestützt ist. Darüber hinaus stützt sich der Grundkörper 22 über Flankenflächen 22b an den beiden Seitenwandungen 18c der Führungsschiene 18 in Horizontalrichtung H sowohl nach rechts als auch nach links ab.

Die Stützeinheit 20 umfasst ferner eine Steuerscheibe 24 (siehe insbesondere Fig. 3 und 4), die am Grundkörper 22 mittels einer an diesem befestigten Abdeckplatte 26 um eine zur Drehachse A der Gewindespindel 12 im Wesentlichen parallel und im Ausführungsbeispiel gemäß Fig. 3 zu dieser sogar koaxial verlaufende Achse drehbar gelagert ist. Die Steuerscheibe 24 ist derart ausgebildet, dass der Haken 28 einer benachbarten Stützeinheit 20 bzw. des Läufers 14 eine Mitnahmefläche 24a der Steuerscheibe 24 hintergreifen und somit den Mitnahmeeingriff herstellen kann. Einweisungsschrägen 28a am Haken 28 und 24d an der Steuerscheibe 24 erleichtern unter Zuhilfenahme der Elastizität des Hakenarms 28b die Herstellung des Mitnahmeeingriffs.

An einem der Mitnahmefläche 24a bezüglich der Achse A gegenüberliegenden Umfangsabschnitt sind in der Steuerscheibe 24 eine Mehrzahl von Steuervertiefungen 24b, die sich jeweils in Radialrichtung R erstrecken und voneinander paarweise durch einen Steuerzahn 24c getrennt sind. Diese Steuervertiefungen 24b dienen zum Eingriff mit einer Steuerschiene 30, die aus einer Mehrzahl von Geradabschnitten 32 und einer Mehrzahl von Schrägabschnitten 34 zusammengesetzt ist. Die Steuerschiene 30 ist gemäß Fig. 2 am Boden des U-Profils der Führungsschiene 18 in einer Ausnehmung 18d befestigt. In dem dargestellten Ausführungsbeispiel ist die Ausnehmung 18d hinterschnitten ausgebildet. Ferner weisen die Schienenabschnitte 32 und 34 T-förmige Ansätze 32b und 34b (siehe Figuren 5 und 6) auf, mittels derer sie in Längsrichtung L der Führungsschiene 18 in die hinterschnittene Nut 18d eingeschoben werden können.

In Fig. 5 ist ein Geradabschnitt 32 der Steuerschiene 30 perspektivisch und vergrößert dargestellt. Er umfasst eine Basisplatte 32a, die nach Einführen des T-förmigen Ansatzes 32b in die Nut 18d über Bohrungen 32c mit der Führungsschiene 18 verschraubt werden kann. Auf der dem T-förmigen Ansatz 32b abgewandten Seite der Basisplatte 32a umfasst das Geradteil 32 einen Führungsansatz 32d mit zwei geraden Führungsansätzen 32e und 32f. Diese Führungsansätze 32e und 32f dienen zum Eingriff in die Steuervertiefungen 24b der Steuerscheibe 24, während einer der Steuerzähne 24c der Steuerscheibe 24 in die zwischen den Führungsansätzen 32e und 32f ausgebildete Nut 32g eingreift. Durch den Eingriff des Geradteils 32 mit der Steuerscheibe 24 wird bei Bewegung der zugeordneten Stützeinheit 20 in Laufrichtung L ein unbeabsichtigtes bzw. versehentliches Verdrehen der Steuerscheibe 24 um die Achse A verhindert.

In Fig. 6 ist ein Schrägteil 34 perspektivisch und vergrößert dargestellt. Es umfasst eine Basisplatte 34a, die nach Einführen des T-förmigen Ansatzes 34b in die Nut 18d der Führungsschiene 18 über Bohrungen 34c an der Führungsschiene befestigt werden kann. Auf der dem Ansatz 34b abgewandten Seite der Basisplatte 34a verfügt das Schrägteil 34 über einen Führungsansatz 34d, von dem ein einzelner Steueransatz 34e absteht. Der Steueransatz 34e wechselt über die Länge des Weichenteils 34 zwischen einer zum Führungsansatz 32e des Geradteils 32 korrespondierenden Querposition 34e1 zu einer zum Führungsteil 32f des Geradteils 32 korrespondierenden Querposition 34e2. In dem in Fig. 6 dargestellten Ausführungsbeispiel nimmt er dabei in einer durch die Längsrichtung L und die Horizontalrichtung H aufgespannten Ebene einen Verlauf, der annähernd einer halben Periode einer Sinuswelle entspricht, und zwar von deren Minimum zu deren Maximum.

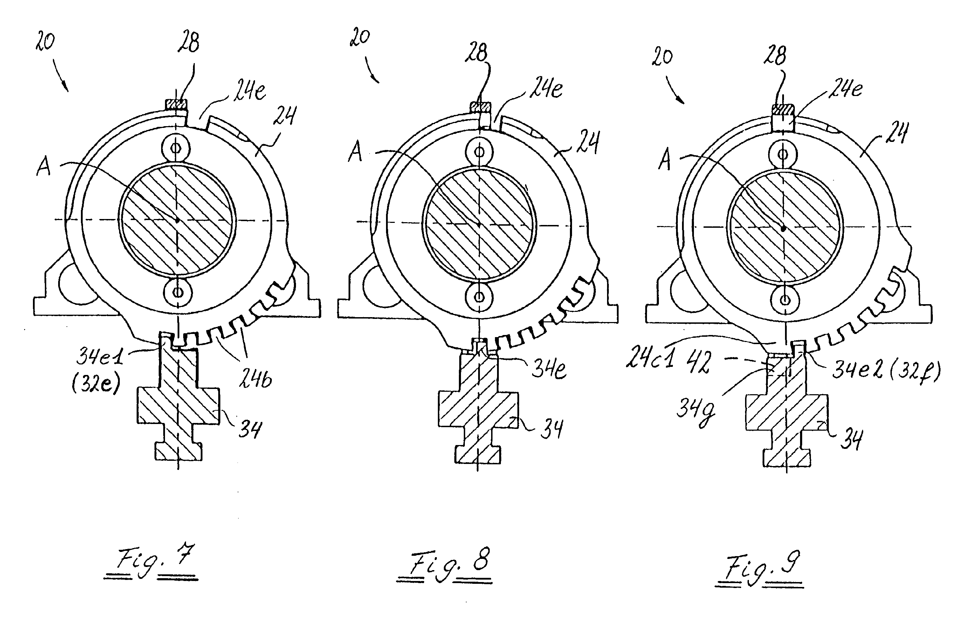

Infolge des Eingriffs des Steueransatzes 34e in eine der Steuervertiefungen 24b wird die Steuerscheibe 24 bei Bewegung der Stützeinheit 20 in Laufrichtung L um ihre Achse A um einen Winkel gedreht, der dem Abstand zweier benachbarter Steuervertiefungen 24b entspricht. Dies ist im Detail in der Folge der Figuren 7 bis 9 dargestellt. Zum Verständnis der Figuren 7 bis 9 sei noch darauf hingewiesen, dass diese Aufeinanderfolge von Figuren einer Bewegung einer der in Fig. 1 dargestellten Stützeinheiten 20 in Fig. 1 nach rechts entspricht, wobei die Stützeinheiten 20 allerdings aus einer beispielsweise in Fig. 3 durch den Pfeil IV angedeuteten Blickrichtung betrachtet werden.

Gemäß Fig. 7 hat die Stützeinheit 20, genauer gesagt deren Steuerscheibe 24, gerade den Eingriffsbereich eines Geradteils 32 verlassen und befindet sich im Eingriff mit einem Schrägteil 34, und zwar im Bereich der Querposition 34e1 des Steueransatzes 34e. Bei weiterer Bewegung in Längsrichtung L gemäß Fig. 1 nach rechts wechselt der Steueransatz 34e seine Querposition (siehe Fig. 8), bis er gemäß Fig. 9 die Querposition 34e2 erreicht, die der Querposition des Führungsstegs 32f des Geradteils 32 entspricht. Infolge dieser Querverlagerung des Steueransatzes 34e wird die Steuerscheibe 24 um die Achse A entgegen dem Uhrzeigersinn um einen Winkel gedreht, der dem Abstand zweier benachbarter Steuervertiefungen 24b der Steuerscheibe 24 entspricht. Die Steuerscheibe 24 wird also beim Überfahren eines Schräg- bzw. Schaltteils 34 um einen Teilungsschritt der Zahnung 24b/24c weitergeschaltet.

Da sich der Steueransatz 34e des Schrägteils 34 in den Darstellungen gemäß Figuren 7 - 9 in Eingriff mit der letzten Steuervertiefung 24b befindet, wird die Freigabeausnehmung 24e der Steuerscheibe 24, die sich gemäß Fig. 7 noch außer Flucht mit dem Haken 28 befindet, beim Überfahren des Schrägteils 34 gemäß Fig. 9 in Flucht mit dem Haken 28 der benachbarten Stützeinheit 20 gebracht. Infolgedessen kann dieser Haken 28, ohne einen Widerstand überwinden zu müssen, außer Mitnahmeeingriff mit der dargestellten Stützeinheit 20 treten, welche daher im Bereich des Schrägteils 34 zum Stillstand kommt und dort verbleibt. Auf die vorstehend geschilderte Art und Weise werden die Stützeinheiten 20 bei Bewegung des Läufers 14 in Fig. 1 nach rechts nach und nach an den für sie vorgesehenen Stützpositionen S₁, S₂, usw. abgesetzt.

Festzuhalten ist, dass alle Stützeinheiten 20 den gleichen Aufbau aufweisen, wobei die Stützposition, an der eine bestimmte Stützeinheit 20 abgestellt wird, d.h. an der die Freigabeausnehmung 24e der Steuerscheibe 24 mit dem Haken 28 der vorauslaufenden Stützeinheit 20 fluchtet, lediglich von der anfänglichen Verdrehung der Steuerscheibe 24 bezüglich der Achse A abhängt. Es versteht sich von selbst, dass die Anzahl der Steuervertiefungen 24b der Steuerscheibe 24 zumindest der Anzahl von Stützeinheiten 20 entspricht, die auf einer Seite des Läufers 14 vorgesehen ist. Dabei ist es aber nicht schädlich, wenn eine größere Anzahl von Steuervertiefungen 24b vorgesehen ist. Somit können die für den Einsatz bei längeren Gewindespindeln 12 ausgelegten Steuerscheiben 24 ohne weiteres auch bei kürzeren Gewindespindeln 12 eingesetzt werden.

Mit Bezug auf Fig. 3 ist noch nachzutragen, dass die Stützeinheit 20 ferner eine Verdrehsicherung 38 aufweist, welche beispielsweise als federvorgespannte Rastkugel 38a ausgebildet ist, die in einer Bohrung 22c des Grundkörpers 22 aufgenommen ist und in eine Rastausnehmung 24f der Steuerscheibe 24 eingreift, wenn sich die Freigabeausnehmung 24e gemäß Fig. 9 in Flucht mit dem Haken 28 der benachbarten Stützeinheit 20 befindet.

Die Verdrehsicherung 38 stellt zum einen sicher, dass die Freigabeausnehmung 24e nach der Aufhebung des Mitnahmeeingriffs in der mit dem Haken 28 fluchtenden Stellung verbleibt, so dass eine erneute Herstellung des Mitnahmeeingriffs problemlos erfolgen kann. Zum anderen kann durch die Verrastung der Steuerscheibe 24 sichergestellt werden, dass die Stützeinheit 20 weder das in Bewegungsrichtung L gerade zurückliegende Schrägteil 34 noch das in Bewegungsrichtung L nächstfolgende Schrägteil 34 selbsttätig überwinden kann. Daher können mit den erfindungsgemäßen Stützeinheiten 20 ausgestattete Lineareinheiten 10 problemlos auch als Z-Achsen eingesetzt werden, d.h. als Verstellachsen, bei denen die Längsachse der Gewindespindel 12 im Unterschied zu dem vorstehend stillschweigend verwendeten Koordinatensystem nicht horizontal, sondern vertikal verläuft. Unterhalb des Läufers 14 angeordnete Stützeinheiten 20 verbleiben dabei bei einer Nach-oben-Bewegung des Läufers 14 im Bereich desjenigen Schrägteils 34, das für die fluchtende Anordnung der Freigabeausnehmung 24e mit dem Haken 28 gesorgt hat. Hingegen folgen oberhalb des Läufers 14 angeordnete Stützeinheiten 20 einer Nach-unten-Bewegung des Läufers 14 noch bis zum nächstfolgenden Schrägteil 34. Dieser Effekt kann jedoch ohne weiteres bei der Einstellung der Anfangsdrehstellung der Steuerscheiben 24 berücksichtigt werden.

Sollte das Eigengewicht der Stützeinheiten 20 jedoch so groß sein, dass die Verdrehsicherung 38 alleine nicht in der Lage ist, die jeweilige Stützeinheit 20 in der für sie vorbestimmten Stützposition zu halten, so können im Bereich der Schrägteile 34 zusätzlich Brems- und Halteelemente 42 vorgesehen sein. Das Schrägteil 34 weist hierzu vorzugsweise eine Ausnehmung 34g auf, in der das Brems- und Halteelement 42 aufgenommen werden kann. Diese Ausnehmung 34g ist beispielsweise in den Figuren 6 und 9 gestrichelt angedeutet.

Das Brems- und Halteelement 42 kann beispielsweise als Federbügel ausgebildet sein, wie dies in Fig. 13 dargestellt ist. Es umfasst einen bogenförmigen Steg 42a, der an seinen beiden Enden 42b mit einer Basisplatte 42c verbunden ist. Der Gipfelpunkt 42d des bogenförmigen Stegs 42a überragt die Basisplatte 42c so weit, dass er dann, wenn die Steuerscheibe 24 die in Fig. 9 gezeigte Stellung erreicht hat, mit der Stirnfläche eines endständigen Steuerzahns 24c1 in Reibeingriff treten kann. Hierdurch kann das Bremselement 42 auf die Steuerscheibe 24 und somit die ganze Stützeinheit 20 eine deren Bewegung bremsende Kraft ausüben.

Festzuhalten ist, dass die Steuerscheibe 24 dann, wenn die Stützeinheit 20 noch nicht die für sie vorgesehene Stützposition erreicht hat, beim Überfahren des Bremselements 42 derart angeordnet ist, dass die Querposition einer der Steuervertiefungen 24b mit der Querposition des Bremselements 42 fluchtet. Infolgedessen kann das Bremselement 42 auf diese Stützeinheit 20 keine Bremskraft ausüben, und die Stützeinheit 20 kann sich an dem Bremselement 42 ungehindert vorüberbewegen. Trotz des Vorsehens der Bremselemente 42 ist somit eine unerwünschte Geräuschentwicklung zuverlässig verhindert.

Die von dem Bremselement 42 auf die Stützeinheit 20 ausgeübte Bremskraft kann durch die Wahl der Form oder/und des Materials beeinflusst werden. Insbesondere braucht der Steg 42a nicht an seinen beiden Enden 42b mit der Basisplatte 42c verbunden zu sein. Um die elastische Verformbarkeit des Bügels 42a erhöhen und somit die Bremskraft verringern zu können, kann der Federbügel mit der Basisplatte beispielsweise lediglich an einem seiner Enden verbunden sein.

In Fig. 16 und 17 ist eine weitere Ausführungsform eines Schrägabschnitts einer Steuerschiene für einen erfindungsgemäßen Wälzkörpergewindetrieb dargestellt. Dieser Schrägabschnitt entspricht in seiner Funktion dem in Fig. 6 dargestellten und mit einer Bremseinrichtung 42 gemäß Fig. 13 bestückten Schrägabschnitt 34 und unterscheidet sich von diesem lediglich in einigen konstruktiven Details. In Fig. 16 und 17 sind daher analoge Teile mit gleichen Bezugszeichen versehen wie in den Fig. 6 und 13, jedoch erhöht um die Zahl 500. Außerdem wird das Schrägteil 534 gemäß Fig. 16 und 17 im Folgenden nur insoweit beschrieben werden, als es sich von dem Schrägteil 34 gemäß Fig. 6 und 13 unterscheidet, auf dessen Beschreibung hiermit ansonsten ausdrücklich verwiesen sei.

Der Hauptunterschied zwischen dem Schrägteil 534 und dem Schrägteil 34 besteht darin, dass die Bremseinrichtungen 542 an dem Schrägteil 534 einstückig angeformt sind, was herstellungstechnische Vorteile hat. Darüber hinaus ist der Steg 542a der Bremseinrichtungen 542 in Form einer zu den Längsenden des Schrägteils 534 hin ansteigenden Rampe ausgebildet, so dass die gesamte Länge des Bügels 542a zum Bremsen der Stützeinheit 20 genutzt werden kann.

Wie das Schrägteil 34 gemäß Fig. 6 verfügt auch das Schrägteil 534 gemäß Fig. 16 und 17 über einen Führungsansatz 534d, der der seitlichen Führung des Schrägteils 534 in der Aufnahmenut 518d der Führungsschiene 518 dient (siehe Fig. 17). Zur Führung in Vertikalrichtung V verfügt das Schrägteil 534 über seitliche Ansätze 534h, die sich vorzugsweise über seine gesamte Länge erstrecken. Darüber hinaus ist an den Längsenden des Schrägteils 534 jeweils ein Federelement 534i vorgesehen, das in Längsrichtung L derart geschwungen ausgebildet ist, dass es mit der unteren Begrenzungsfläche eines ersten Schwingungsbauchs 534i1 am Boden der Aufnahmenut 518d aufliegt und die seitlichen Ansätze 534h nach oben in Anlage an die Begrenzungsfläche der Aufnahmenut 518d drängt. Die obere Begrenzungsfläche eines zweiten Schwingungsbauchs 534i2 der Federelemente 534i dient hingegen zur passgenauen Justierung des benachbarten Geradteils der Steuerschiene.

Hinzuweisen ist ferner auf die Vorsprünge 534k, die auf beiden Seiten des Führungsansatzes 534d in Längsrichtung des Schrägteils 534 verteilt angeordnet sind. Diese Vorsprünge 534k dienen der Verbesserung der axialen Lagefixierung des Schrägteils 534 in der Aufnahmenut 518d. Sie sind hierzu bezüglich der Differenz der Breite der Öffnung der Nut 518d und der Breite des Führungsansatzes 534d mit einem geringen Übermaß ausgebildet. Dieses Übermaß wird beim Einschieben des Schrägteils 534 in die Nut 518d zumindest teilweise abgequetscht oder zusammengedrückt, so dass das Schrägteil 534 fest in der Aufnahmenut 518d sitzt. Selbstverständlich können auch die sich an die Schrägteile anschließenden Geradteile hinsichtlich Führung und Sitz in der Aufnahmenut 518d dem vorstehend beschriebenen Schrägteil 534 entsprechend mit seitlichen Ansätzen (entsprechend 534h), Vorsprüngen (entsprechend 534k) und Federelementen (entsprechend 534i) oder Ausnehmungen zur Aufnahme derartiger Federelemente ausgebildet sein.

Zu betonen ist, dass die erfindungsgemäße Bremseinrichtung 42 selbstverständlich auch bei im Wesentlichen horizontal oder mit nur geringer Neigung verlaufender Gewindespindel 12 mit Vorteil eingesetzt werden kann, um die Stützeinheiten 20 sicher an den für sie vorgesehenen Stützpositionen zum Stillstand bringen und halten zu können.

Nachzutragen ist ferner, dass an einer stirnseitigen Endfläche des Grundkörpers 22 der Stützeinheiten 20 Dämpfungselemente 40 vorgesehen sind (siehe beispielsweise Figuren 1, 2 und 3), welche in zugehörigen Vertiefungen des Grundkörpers 22 aufgenommen sind und aus diesen um eine vorbestimmte Distanz herausragen, um beim Aufprall zweier benachbarter Stützeinheiten 20 diesen Aufprall und die damit verbundene Geräuschentwicklung dämpfen zu können. Die Anzahl, die Abmessungen und das Material bzw. die Materialeigenschaften dieser Dämpfungselemente 40 können in Abhängigkeit des jeweiligen Einsatzfalles beliebig gewählt werden.

Obgleich vorstehend auf eine Ausführungsform Bezug genommen wurde, bei welcher die Steuerscheibe 24 beim Überfahren eines Schrägabschnitts 34 eine Drehbewegung in Umfangsrichtung U um die Achse A ausführt (siehe beispielsweise Fig. 4), ist es bei entsprechendem in der Schiene 18 vorhandenem Bauraum ebenfalls möglich, einen Steuerschieber 124 einzusetzen, wie er beispielsweise in Fig. 10 dargestellt ist. Dieser Steuerschieber 124 umfasst eine Mehrzahl von sich in Vertikalrichtung V erstreckenden Steuervertiefungen 124b und dazwischen angeordneten Steuerzähnen 124c, die mit den Führungsansätzen 32e und 32f der Geradteile 32 und den Steueransätzen 34e der Schrägteile 34 der in Fig. 1 dargestellten Steuerschiene 30 in Steuereingriff bringbar sind. Allerdings wird der Steuerschieber 124 beim Überfahren eines Schrägteils 34 nicht in Umfangsrichtung U um eine Achse A gedreht, sondern vielmehr in Horizontalrichtung H verschoben. Ferner weist auch der Steuerschieber 124 eine Freigabeausnehmung 124e auf, die in und außer Flucht mit dem Haken 28 einer benachbarten Stützeinheit 20 gebracht werden kann. Schließlich ist am Steuerschieber 124 auch eine Sicherungsrastausnehmung 124f und eine Einweisungsschräge 124d für den Haken 28 vorgesehen. Obgleich der Steuerschieber 124 gemäß Fig. 10 als nach links offenes, im Wesentlichen U-förmiges Teil ausgebildet ist, kann er auch als geschlossenes Ringteil ausgebildet sein, dessen Ringloch als Langloch ausgebildet ist. Ansonsten entspricht der Steuerschieber 124 in seiner Funktion der Steuerscheibe 24 gemäß Fig. 4.

Die vorstehend geschilderten Ausführungsformen mit der Steuerscheibe 24 gemäß Fig. 4 bzw. dem Steuerschieber 124 gemäß Fig. 10 haben den Vorteil, dass zu ihrer Funktion grundsätzlich keinerlei Rastwirkung erforderlich ist und somit der Arm 28b des Hakens 28 (siehe Fig. 3) im Wesentlichen starr ausgebildet sein kann. Es sei daran erinnert, dass die Einweisungsschrägen 28a und 24d lediglich aus Sicherheitsgründen vorgesehen sind, dass aber ansonsten die Herstellung des Mitnahmeeingriffs zwischen dem Haken 28 und der Steuerscheibe 24 bzw. deren Mitnahmefläche 24a ohne Rastwirkung erfolgen kann, beispielsweise indem der Haken 28 durch die Freigabeausnehmung 24e hindurchgeführt wird und anschließend durch Verdrehen der Steuerscheibe 24 und Außer-Flucht-Bringen von Freigabeausnehmung 24e und Haken 28 der Haken 28 an der Steuerscheibe 24 verriegelt wird. Wie nachfolgend anhand von Figuren 1 1 und 12 näher erläutert werden wird, sind jedoch auch Ausführungsformen denkbar, bei denen zur Herstellung des Mitnahmeeingriffs gezielt eine Verrastung des Hakens an der Stützeinheit eingesetzt und diese Verrastung durch Einsatz eines Steuernockens wieder aufgehoben wird.

Bei der in Fig. 1 dargestellten Stützeinheit 220 hintergreift der Haken 228 eine Mitnahmefläche 226a des Abdeckelements 226, welches die Steuerscheibe 224 um die Achse A drehbar am Grundkörper 222 der Stützeinheit 220 hält. Bei der Herstellung des Rasteingriffs von Haken 228 und Abdeckscheibe 226 helfen Einweisungsschrägen 228a am Haken 228 und 226b an der Abdeckscheibe 226. An der Steuerscheibe 224 ist gemäß Fig. 12 ein Freigabenocken 224e ausgebildet, der dann, wenn er mit dem Haken 228 fluchtet, den Arm 228b des Hakens 228 derart elastisch verformt, dass der Rasteingriff zwischen Haken 228 und Abdeckscheibe 226 aufgehoben wird. Hinsichtlich der Steuerverzahnung 224e/224c und der Sicherungsrastausnehmung 224f entspricht die Steuerscheibe 224 in Aufbau und Funktion der Steuerscheibe 24 gemäß Fig. 4.

Obgleich vorstehend Aufbau und Funktion der Stützeinheiten 20 am Beispiel eines Wälzkörpergewindetriebs 10 mit einer Gewindespindel 12 erläutert wurde, sei darauf hingewiesen, dass sich die erfindungsgemäßen Stützeinheiten auch bei anderen Arten von Lineareinheiten mit Vorteil einsetzen lassen. Nachfolgend sei mit Bezug auf Figuren 14 und 15 lediglich beispielhaft auf zwei weitere Einsatzmöglichkeiten hingewiesen.

Gemäß Fig. 14 ist die Lineareinheit 310 als eine nicht zur Erfindung gehörende Magnetkolbeneinheit ausgeführt. Die Stange dieser Magnetkolbeneinheit ist als längliches Rohr 312 ausgebildet, das auf einer Basisplatte 318 gelagert ist und in welchem ein mit Permanentmagneten bestückter Kolben 312a durch entsprechende Zufuhr bzw. Abfuhr von Druckfluid durch Anschlussstutzen 312b bzw. 312c in Längsrichtung L hin- und herbewegbar aufgenommen ist. Der Läufer ist in diesem Anwendungsfall von einem auf dem Rohr 312 verschiebbar geführten Schlitten 314 gebildet, der mit dem Magnetkolben 312a über Magnetkräfte gekoppelt ist und dessen Bewegung in Längsrichtung L folgt. Um ein Durchhängen des Rohrs 312 zuverlässig verhindern zu können, können wie bei den vorstehend beschriebenen Ausführungsbeispielen Stützeinheiten 320 vorgesehen sein, die von dem Läufer 314 bei seiner Bewegung "aufgesammelt" bzw. "abgesetzt" werden.

Ein weiteres nicht zur Erfindung gehörendes Anwendungsbeispiel für eine Lineareinheit ist das in Fig. 15 dargestellte Linearmotormodul 410, bei welchem ein Läufer 414 auf einer permanentmagnetischen Stange 412 in Längsrichtung L verschiebbar ist, wobei die permanentmagnetische Stange 412 mit dem Läufer 414 und einer magnetisch leitfähigen Grundplatte 418 einen magnetischen Kreis eines Linearmotors bildet. Bei dieser Ausführungsform treten zur Schwerkraft auch noch magnetische Kräfte zwischen der Vorschubstange 412 und der Basisplatte 418 auf, welche die Stange 412 zu verformen suchen. Daher können auch bei dieser Ausführungsform Stützeinheiten 420 vorgesehen sein, welche die Stange 412 relativ zu der Basisplatte 418 abstützen.

## Patentansprüche

1. Lineareinheit (10) mit einem Läufer (14), der längs einer Stange (12) hin- und herbewegbar angeordnet ist,
wobei in Laufrichtung (L) des Läufers (14) vor oder/und hinter diesem wenigstens eine Stützeinheit (20) vorgesehen ist, welche die Stange (12) relativ zu einem im Wesentlichen starren Gegenelement (18) abstützt,
wobei an dem Läufer (14) oder einer mit diesem verbundenen Einheit ein Mitnehmer (28) vorgesehen ist, der mit der Stützeinheit (20) in Mitnahmeeingriff bringbar ist,
wobei die Stützeinheit (20) einen zum einen an der Stange (12) und zum anderen an dem Gegenelement (18) in Laufrichtung (L) längsverschiebbar, jedoch bezüglich der Laufrichtung (L) drehfest geführten Grundkörper (22) umfasst, an welchem ein Steuerelement (24; 124; 224) bewegbar gelagert ist, das mittels einer am Gegenelement (18) vorgesehenen Steuerbahn (30) zwischen wenigstens einer Mitnahmestellung und wenigstens einer Freigabestellung verstellbar ist,
**dadurch gekennzeichnet, dass** das Steuerelement (24; 124; 224) wenigstens eine Steuervertiefung (24b; 124b; 224b) mit einer zur Laufrichtung (L) im Wesentlichen orthogonal verlaufenden Vertiefungsrichtung (R; V) aufweist und dass die Steuerbahn (30) an wenigstens einer vorbestimmten Position (S₁, S₂) einen Steueransatz (34e) umfasst, der mit der Steuervertiefung (24b; 124b; 224b) in Eingriff bringbar und bezüglich der Laufrichtung (L) derart schräg angeordnet ist, dass er das Steuerelement (24; 124; 224) bei Bewegung der Stützeinheit (20) in Laufrichtung (L) im Wesentlichen quer (U; H) sowohl zur Laufrichtung (L) als auch zur Vertiefungsrichtung (R; V) verstellt.

2. Lineareinheit nach Anspruch 1,
**dadurch gekennzeichnet, dass** das Steuerelement eine Steuerscheibe (24; 224) ist, die an dem Grundkörper (22; 222) um eine zur Längsachse der Stange (12) im Wesentlichen parallel verlaufende Achse (A) drehbar angeordnet ist.

3. Lineareinheit nach Anspruch 1,
**dadurch gekennzeichnet, dass** das Steuerelement ein Steuerschieber (124) ist, der an dem Grundkörper in einer zur Längsachse der Stange (12) im Wesentlichen orthogonal verlaufenden Richtung (H) verlagerbar angeordnet ist.

4. Lineareinheit nach einem der Ansprüche 1 bis 3,
**dadurch gekennzeichnet, dass** das Steuerelement (24; 124; 224) mittels eines Abdeckelements (26; 226) in einer zwischen dem Abdeckelement (26; 226) und einer Schulter des Grundkörpers (22; 222) ausgebildeten Vertiefung gehalten ist.

5. Lineareinheit nach einem der Ansprüche 1 bis 4,
**dadurch gekennzeichnet, dass** der Mitnehmer ein Hakenelement (28; 228) umfasst.

6. Lineareinheit nach einem der Ansprüche 1 bis 5,
**dadurch gekennzeichnet, dass** an dem Grundkörper (22; 222) zur Mitnahme einer benachbarten Stützeinheit (20; 220) ein weiterer Mitnehmer (28; 228) angeordnet ist.

7. Lineareinheit nach Anspruch 5 oder 6,
**dadurch gekennzeichnet, dass** das Hakenelement (28) eine Mitnahmefläche (24a; 124a) des Steuerelements (24; 124) hintergreift und dass in der Mitnahmefläche (24a; 124a) wenigstens eine Freigabeausnehmung (24e; 124e) vorgesehen ist, welche in der korrespondierenden Freigabestellung mit dem Hakenelement (28) fluchtet.

8. Lineareinheit nach Anspruch 5 oder 6,
**dadurch gekennzeichnet, dass** das Hakenelement (228) eine Mitnahmefläche (226a) des Grundkörpers (222) hintergreift und dass das Steuerelement (224) wenigstens einen Nocken (224e) umfasst, welcher in der korrespondierenden Freigabestellung die Verhakung von Hakenelement (228) und Grundkörper (222) löst.

9. Lineareinheit nach einem der Ansprüche 5 bis 8,
**dadurch gekennzeichnet, dass** das Hakenelement (28; 228) mit dem Läufer (14) oder der mit diesem verbundenen Einheit oder dem Grundkörper (22; 222) der Stützeinheit (20; 220) über einen, vorzugsweise elastischen, Arm (28b; 228b) verbunden ist.

10. Lineareinheit nach einem der Ansprüche 5 bis 9,
**dadurch gekennzeichnet, dass** an wenigstens einem der Teile, Hakenelement (28) und Steuerelement (24) oder Hakenelement (228) und Grundkörper (222), eine Einweisungsschräge (28a, 24d; 228a, 226b) ausgebildet ist, welche die Herstellung des Mitnahmeeingriffs erleichtert.

11. Lineareinheit nach einem der Ansprüche 1 bis 10,
**dadurch gekennzeichnet, dass** eine Verstellsicherung (38) vorgesehen ist mit einem, vorzugsweise federvorgespannten, Rastelement (38a), das an einem der Teile, Grundkörper (22) oder Steuerelement, angeordnet ist und in der Freigabestellung in eine Rastausnehmung (24f) eingreift, die am jeweils anderen Teil, Steuerelement (24) oder Grundkörper, vorgesehen ist.

12. Lineareinheit nach einem der Ansprüche 1 bis 11,
**dadurch gekennzeichnet, dass** der wenigstens eine Steueransatz (34e) Teil einer am Gegenelement (18) angeordneten Steuerschiene (30) ist.

13. Lineareinheit nach Anspruch 12,
**dadurch gekennzeichnet, dass** die Steuerschiene (30) wenigstens einen länglichen Geradabschnitt (32) und wenigstens einen länglichen Schrägabschnitt (34) umfasst.

14. Lineareinheit nach Anspruch 13,
**dadurch gekennzeichnet, dass** der Geradabschnitt (32) wenigstens einen Führungsansatz (32e, 32f) aufweist, der über die gesamte Länge des Geradabschnitts (32) an im Wesentlichen der gleichen Querposition angeordnet ist, und zum Eingriff in eine zugeordnete Steuervertiefung (24b) bestimmt ist, während der Steueransatz (34e) des Schrägabschnitts (34) längs dessen Länge seine Querposition (34e1, 34e2) ändert.

15. Lineareinheit nach einem der Ansprüche 1 bis 14,
**dadurch gekennzeichnet, dass** an wenigstens einer Stirnseite des Grundkörpers (22) eine Dämpfungsvorrichtung (40) vorgesehen ist.

16. Lineareinheit nach einem der Ansprüche 1 bis 15,
**dadurch gekennzeichnet, dass** dem Steueransatz (34e) benachbart eine Bremsvorrichtung (42) vorgesehen ist zum, vorzugsweise reibschlüssigen, Bremseingriff mit der Stützeinheit (20), vorzugsweise deren Steuerelement (24).

17. Lineareinheit nach einem der Ansprüche 1 bis 16,
**dadurch gekennzeichnet, dass** der Grundkörper (22) oder/und das Steuerelement (24) oder/und das Abdeckelement (26) oder/und die Elemente (32, 34) der Steuerbahn (30) aus Kunststoff gefertigt ist bzw. sind.

18. Lineareinheit nach einem der Ansprüche 1 bis 17,
**dadurch gekennzeichnet, dass** das Gegenelement eine Schiene (18) mit einem an wenigstens einer Seite offenen Hohlprofil ist, in deren Innenraum (18a) zumindest die Stange (12) und die wenigstens eine Stützeinheit (20) aufgenommen sind.

19. Lineareinheit nach einem der Ansprüche 1 bis 18,
**dadurch gekennzeichnet, dass** der Grundkörper (22) die Stange (12) im Wesentlichen auf ihrem gesamten Umfang umschließt.

20. Lineareinheit nach einem der Ansprüche 1 bis 19,
**dadurch gekennzeichnet, dass** der Grundkörper (22) an dem Gegenelement, (18) gleitverschieblich geführt ist.

21. Lineareinheit nach einem der Ansprüche 1 bis 20,
**dadurch gekennzeichnet, dass** sie ein Wälzkörpergewindetrieb (10) ist, wobei die Stange als Gewindespindel (12) ausgebildet ist und wobei der Läufer (14) eine Gewindemutter (16) umfasst.

22. Lineareinheit nach einem der Ansprüche 1 bis 20,
**dadurch gekennzeichnet, dass** sie eine Kugelbüchsenführung ist.

## Claims

1. Linear unit (10) with a runner (14) which is arranged so as to be movable back and forth along a rod (12),
wherein at least one support unit (20), which supports the rod (12) relative to a substantially rigid counter-element (18), is provided in front of or/and behind the runner (14) in the direction of travel (L) thereof,
wherein a catch (28), which can be brought into latched engagement with the support unit (20), is provided on the runner (14) or a unit connected thereto,
wherein the support unit (20) comprises a base body (22) which is longitudinally movable on the one hand on the rod (12) and on the other on the counter-element (18) in the direction of travel (L), yet is guided in a non-rotatable manner with respect to the direction of travel (L), and on which a control element (24; 124; 224) is mounted in a movable manner, which element can be moved between at least one latched position and at least one release position by means of a control track (30) provided on the counter-element (18),
**characterised in that** the control element (24; 124; 224) has at least one control recess (24b; 124b; 224b) with a recess direction (R; V) extending substantially orthogonally to the direction of travel (L), and that the control track (30) comprises at least at one predetermined position (S₁, S₂) a control projection (34e) which can be brought into engagement with the control recess (24b; 124b; 224b) and is arranged at an angle with respect to the direction of travel (L) such that, when the support unit (20) moves in the direction of travel (L), it moves the control element (24; 124; 224) substantially laterally (U; H) both to the direction of travel (L) and to the recess direction (R; V).

2. Linear unit according to Claim 1,
**characterised in that** the control element is a control disc (24; 224) which is arranged on the base body (22; 222) so as to be rotatable about an axis (A) extending substantially parallel to the longitudinal axis of the rod (12).

3. Linear unit according to Claim 1,
**characterised in that** the control element is a control slide (124) which is arranged on the base body so as to be movable in a direction (H) extending substantially orthogonally to the longitudinal axis of the rod (12).

4. Linear unit according to any one of Claims 1 to 3,
**characterised in that** the control element (24; 124; 224) is held by means of a cover element (26; 226) in a recess formed between the cover element (26; 226) and a shoulder of the base body (22; 222).

5. Linear unit according to any one of Claims 1 to 4,
**characterised in that** the catch comprises a hook element (28; 228).

6. Linear unit according to any one of Claims 1 to 5,
**characterised in that** a further catch (28; 228) is arranged on the base body (22; 222) for latching engagement with an adjacent support unit (20; 220).

7. Linear unit according to Claim 5 or 6,
**characterised in that** the hook element (28) engages behind a latch surface (24a; 124a) of the control element (24; 124), and that at least one release recess (24e; 124e), which is aligned with the hook element (28) in the corresponding release position, is provided in the latch surface (24a; 124a).

8. Linear unit according to Claim 5 or 6,
**characterised in that** the hook element (228) engages behind a latch surface (226a) of the base body (222), and that the control element (224) comprises at least one cam (224e) which releases the hooked engagement of the hook element (228) and the base body (222) in the corresponding release position.

9. Linear unit according to any one of Claims 5 to 8,
**characterised in that** the hook element (28; 228) is connected to the runner (14) or the unit connected thereto or the base body (22; 222) of the support unit (20; 220) via a, preferably resilient, arm (28b; 228b).

10. Linear unit according to any one of Claims 5 to 9,
**characterised in that** a guide bevel (28a, 24d; 228a, 226b) is formed on at least one of the parts, hook element (228) and control element (24) or hook element (228) and base body (222), which bevel facilitates the establishment of the latched engagement.

11. Linear unit according to any one of Claims 1 to 10,
**characterised in that** an anti-movement feature (38) is provided, this having a, preferably spring-biased, locking element (38a) which is arranged on one of the parts, base body (22) or control element, and engages in a locking recess (24f), which is provided at the respective other part, control element (24) or base body, in the release position.

12. Linear unit according to any one of Claims 1 to 11,
**characterised in that** the at least one control projection (34e) is part of a control rail (30) arranged on the counter-element (18).

13. Linear unit according to Claim 12,
**characterised in that** the control rail (30) comprises at least one elongate straight section (32) and at least one elongate angled section (34).

14. Linear unit according to Claim 13,
**characterised in that** the straight section (32) has at least one guide projection (32e, 32f) which is arranged at substantially the same lateral position over the entire length of the straight section (32), and is intended to engage in an associated control recess (24b), while the control projection (34e) of the angled section (34) changes its lateral position (34el, 34e2) along the length thereof.

15. Linear unit according to any one of Claims 1 to 14,
**characterised in that** a damping device (40) is provided on at least one front face of the base body (22).

16. Linear unit according to any one of Claims 1 to 15,
**characterised in that** a braking device (42) is provided adjacent to the control projection (34e) for, preferably frictional, braking engagement with the support unit (20), preferably the control unit (24) thereof.

17. Linear unit according to any one of Claims 1 to 16,
**characterised in that** the base body (22) or/and the control element (24) or/and the cover element (26) or/and the elements (32, 34) of the control track (30) is or are made of plastics material.

18. Linear unit according to any one of Claims 1 to 17,
**characterised in that** the counter-element is a rail (18) with a hollow profile which is open on at least one side and in the interior space (18a) of which at least the rod (12) and the at least one support unit (20) are accommodated.

19. Linear unit according to any one of Claims 1 to 18,
**characterised in that** the base body (22) encloses the rod (12) substantially over its entire circumference.

20. Linear unit according to any one of Claims 1 to 19,
**characterised in that** the base body (22) is guided on the counter-element (18) so as to be movable by sliding.

21. Linear unit according to any one of Claims 1 to 20,
**characterised in that** it is a rolling body threaded drive (10), wherein the rod is formed as a threaded spindle (12) and wherein the runner (14) comprises a threaded nut (16).

22. Linear unit according to any one of Claims 1 to 20,
**characterised in that** it is a ball-type bushing guide.

## Revendications

1. Unité linéaire (10) comportant un curseur (14), qui est agencé de manière à aller et venir le long d'une barre (12), dans laquelle au moins une unité d'appui (20) est prévue dans le sens de marche (L) du curseur (14) avant ou/et après ce dernier, ladite unité d'appui soutenant la barre (12) par rapport à un élément complémentaire (18) pour l'essentiel rigide, dans laquelle un entraîneur (28) est prévu au niveau du curseur (14) ou d'une unité reliée avec ce dernier, ledit entraîneur pouvant être mis en prise d'entraînement avec l'unité d'appui (20), dans laquelle l'unité d'appui (20) comprend un corps de base (22) guidé en déplacement longitudinal dans le sens de marche (L) d'une part sur la barre (12) et d'autre part sur l'élément complémentaire (18), cependant bloqué en rotation en ce qui concerne le sens de marche (L), sur lequel est logé de manière mobile un élément de commande (24 ; 124 ; 224), qui est mobile au moyen d'une voie de commande (30) prévue au niveau de l'élément complémentaire (18) entre au moins une position d'entraînement et au moins une position de libération, **caractérisée en ce que** l'élément de commande (24 ; 124 ; 224) présente au moins un renfoncement de commande (24b ; 124b ; 224b) avec un sens de renfoncement (R ; V) évoluant pour l'essentiel orthogonalement par rapport au sens de marche (L) et **en ce que** la voie de commande (30) comprend au niveau d'au moins une position prédéfinie (S1, S2) une saillie de commande (34e), qui peut être mise en prise avec le renfoncement de commande (24b ; 124b ; 224b) et est agencée en biais en ce qui concerne le sens de marche (L) de telle manière qu'elle déplace l'élément de commande (24 ; 124 ; 224) en cas de mouvement de l'unité d'appui (20) dans le sens de marche (L) pour l'essentiel en travers (U ; H) non seulement du sens de marche (L) mais également du sens de renfoncement (R ; V).

2. Unité linéaire selon la revendication 1, **caractérisée en ce que** l'élément de commande est un disque de commande (24 ; 224), qui est agencé au niveau du corps de base (22 ; 222) de manière à pivoter autour d'un axe (A) évoluant pour l'essentiel parallèlement à l'axe longitudinal de la barre (12).

3. Unité linéaire selon la revendication 1, **caractérisée en ce que** l'élément de commande est un tiroir de commande (124), qui est agencé déplaçable au niveau du corps de base dans une direction (H) évoluant pour l'essentiel orthogonalement à l'axe longitudinal de la barre (12).

4. Unité linéaire selon l'une quelconque des revendications 1 à 3, **caractérisée en ce que** l'élément de commande (24 ; 124 ; 224) est maintenu dans un renfoncement réalisé entre l'élément de recouvrement (26 ; 226) et un épaulement du corps de base (22 ; 222) au moyen d'un élément de recouvrement (26 ; 226).

5. Unité linéaire selon l'une quelconque des revendications 1 à 4, **caractérisée en ce que** l'entraîneur comprend un élément à crochet (28 ; 228).

6. Unité linéaire selon l'une quelconque des revendications 1 à 5, **caractérisée en ce qu'**un autre entraîneur (28 ; 228) est agencé au niveau du corps de base (22 ; 222) en vue de l'entraînement d'une unité d'appui adjacente (20 ; 220).

7. Unité linéaire selon la revendication 5 ou 6, **caractérisée en ce que** l'élément à crochet (28) saisit par derrière une surface d'entraînement (24a ; 124a) de l'élément de commande (24 ; 124) et **en ce qu'**au moins un évidement de libération (24e ; 124e) est prévu dans la surface d'entraînement (24a ; 124a), ledit évidement de libération étant aligné avec l'élément à crochet (28) dans la position de libération correspondante.

8. Unité linéaire selon la revendication 5 ou 6, **caractérisée en ce que** l'élément à crochet (228) saisit par derrière une surface d'entraînement (226a) du corps de base (222) et **en ce que** l'élément de commande (224) comprend au moins une came (224e), laquelle débloque l'accrochage de l'élément à crochet (228) et du corps de base (222) dans la position de libération correspondante.

9. Unité linéaire selon l'une quelconque des revendications 5 à 8, **caractérisée en ce que** l'élément à crochet (28 ; 228) est relié avec le curseur (14) ou avec l'unité reliée avec ce dernier ou avec le corps de base (22 ; 222) de l'unité d'appui (20 ; 220) par l'intermédiaire d'un bras de préférence élastique (28b ; 228b).

10. Unité linéaire selon l'une quelconque des revendications 5 à 9, **caractérisée en ce qu'**une inclinaison de guidage (28a, 24d ; 228a, 226b) est conçue au niveau d'au moins une des parties : élément à crochet (28) et élément de commande (24) ou élément à crochet (228) et corps de base (222), ladite inclinaison de guidage facilitant l'établissement de la prise d'entraînement.

11. Unité linéaire selon l'une quelconque des revendications 1 à 10, **caractérisée en ce qu'**une sécurité en déplacement (38) est prévue comportant un élément d'encliquetage (38a) de préférence précontraint par ressort, qui est agencé au niveau d'une des parties : corps de base (22) ou élément de commande et engrène dans la position de libération dans un évidement d'encliquetage (24f), qui est prévu respectivement au niveau de l'autre partie : élément de commande (24) ou corps de base.

12. Unité linéaire selon l'une quelconque des revendications 1 à 11, **caractérisée en ce que** ladite au moins une saillie de commande (34e) fait partie d'un rail de commande (30) agencé au niveau de l'élément complémentaire (18).

13. Unité linéaire selon la revendication 12, **caractérisée en ce que** le rail de commande (30) comprend au moins une section oblongue droite (32) et au moins une section oblongue oblique (34).

14. Unité linéaire selon la revendication 13, **caractérisée en ce que** la section droite (32) présente au moins une saillie de guidage (32e, 32f), qui est agencée sur toute la longueur de la section droite (32) pour l'essentiel à la même position transversale et est destinée à l'engrènement dans un renfoncement de commande associé (24b), tandis que la saillie de commande (34e) de la section oblique (34) modifie sa position transversale (34e1, 34e2) le long de sa longueur.

15. Unité linéaire selon l'une quelconque des revendications 1 à 14, **caractérisée en ce qu'**un dispositif d'amortissement (40) est prévu au niveau d'au moins une face terminale du corps de base (22).

16. Unité linéaire selon l'une quelconque des revendications 1 à 15, **caractérisée en ce qu'**un dispositif de freinage (42) est prévu adjacent à la saillie de commande (34e) en vue de l'engrènement de freinage de préférence par frottement avec l'unité d'appui (20), de préférence son élément de commande (24).

17. Unité linéaire selon l'une quelconque des revendications 1 à 16, **caractérisée en ce que** le corps de base (22) ou/et l'élément de commande (24) ou/et l'élément de recouvrement (26) ou/et les éléments (32, 34) de la voie de commande (30) est ou sont fabriqués en plastique.

18. Unité linéaire selon l'une quelconque des revendications 1 à 17, **caractérisée en ce que** l'élément complémentaire est un rail (18) comportant un profilé creux ouvert au niveau d'au moins un côté, à l'intérieur (18a) duquel sont logées pour le moins la barre (12) et ladite au moins une unité d'appui (20).

19. Unité linéaire selon l'une quelconque des revendications 1 à 18, **caractérisée en ce que** le corps de base (22) entoure la barre (12) pour l'essentiel sur toute sa périphérie.

20. Unité linéaire selon l'une quelconque des revendications 1 à 19, **caractérisée en ce que** le corps de base (22) est guidé avec possibilité de translation au niveau de l'élément complémentaire (18).

21. Unité linéaire selon l'une quelconque des revendications 1 à 20, **caractérisée en ce qu'**elle est une vis d'entraînement à éléments roulants (10), dans laquelle la barre est conçue sous forme de tige filetée (12) et dans laquelle le curseur (14) comprend un écrou fileté (16).

22. Unité linéaire selon l'une quelconque des revendications 1 à 20, **caractérisée en ce qu'**elle est un guidage à douilles à billes.
